# EUROPÄISCHE PATENTSCHRIFT

(11) **EP 1 861 461 B1**
(45) Veröffentlichungstag und Bekanntmachung des Hinweises auf die Patenterteilung: **31.12.2008**
(21) Anmeldenummer: 06708755.1
(22) Anmeldetag: 14.03.2006
(51) Int. Cl.: C08L 23/04, C08L 39/06, C08F 226/02, B01D 39/00

(54) **VERFAHREN ZUR HERSTELLUNG VON BLENDS AUS POLYSTYROL UND EINEM VERNETZTEN POLYVINYLPYRROLIDON MIT VERRINGERTEM STYROL-RESTMONOMERGEHALT**
METHOD FOR PRODUCING BLENDS CONSISTING OF POLYSTYRENE AND OF A CROSS-LINKED POLYVINYL PYRROLIDONE HAVING A REDUCED STYRENE RESIDUAL MONOMER CONTENT
PROCEDE DE FABRICATION DE MELANGES DE POLYSTYROL ET DE POLYVINYLPYRROLIDONE RETICULEE A TENEUR REDUITE EN MONOMERES RESIDUELS DE STYROL

(30) Priorität: 16.03.2005 DE 102005012484
(43) Veröffentlichungstag der Anmeldung: 05.12.2007
(73) Patentinhaber: BASF SE, 67056 Ludwigshafen (DE)
(72) Erfinder: MATHAUER, Klemens, 69115 Heidelberg (DE); PIEROBON, Marianna, 67063 Ludwigshafen (DE); PETSCH, Tobias, 55758 Mörschied (DE); HEILMANN, Karl-Otto, 67304 Eisenberg (DE); KERBER, Michael, 69469 Weinheim (DE); BAYER, Robert, 74889 Sinsheim (DE)
(86) Internationale Anmeldenummer: PCT/EP2006/060703
(87) Internationale Veröffentlichungsnummer: WO 2006/097470

(56) Entgegenhaltungen:
- EP-A- 1 318 159
- WO-A-00/68286
- WO-A-02/32544
- US-A1- 2004 094 486

## Beschreibung

Die vorliegende Erfindung betrifft ein Verfahren zur Herstellung von aus Polystyrol und einem vernetzten Polyvinylpyrrolidon-Polymeren erhaltenen Blends mit einem verringerten Styrol-Restmonomergehalt.

Polystyrol wird häufig im Zusammenhang mit Lebens- und Genussmitteln angewandt. So findet Polystyrol beispielsweise Verwendung als Filterhilfsmittel bei der Getränkeklärung. Auch Blends aus Polystyrol und vernetztem Polyvinylpyrrolidon finden Anwendung für diesen Zweck.

Allerdings weisen kommerziell erhältliche Polystyrol-Typen üblicherweise noch einen Restmonomeren-Gehalt im Bereich von einigen Hundert ppm auf.

Styrol kann aus der Luft in Mengen von 200 bis 400 ppm geruchsmäßig wahrgenommen werden. In Lebensmitteln wie beispielsweise Tee oder Fruchtnektar können bereits Mengen von 0.2 ppm sensorisch wahrgenommen werden.

Insofern kann es beim Einsatz von Polystyrol im Zusammenhang mit Lebensmitteln und Genussmitteln zu sensorischen Beeinträchtigungen kommen, wenn Styrol aus dem Polystyrol austritt.

In der WO 02/32544. werden beispielsweise Blends aus Polystyrol und vernetztem Polyvinylpyrrolidon beschrieben, die durch Compoundierung im Extruder erhalten werden. Auch solche Produkte weisen einen Restmonomeren-Gehalt an Styrol auf, der Anlass zu Verbesserungen gibt, vor allem da solche Produkte eine große spezifische Oberfläche im Bereich von 2 bis 8 m²/g, bestimmt durch BAT-Messungen gemäß DIN 66131, aufweisen.

Bei Polystyrol, welches durch Lösungspolymerisation erhalten wird, erfolgt die Entfernung von Styrol üblicherweise durch Entgasung der Polymerlösung. Weiterhin kann der Gehalt an Styrol auch durch Entgasung einer Polystyrol-Schmelze im Extruder erniedrigt werden.

In der DE 808788 ist die Entfernung von flüchtigen Komponenten aus Polystyrol und Styrolcopolymerisaten durch Behandlung mit Wasserdampf beschrieben. Ziel dieses Verfahrens ist es, den Erweichungspunkt der Polymerisate heraufzusetzen.

In der JP-A 2002097362 ist die Desodorierung von Polyphenylenether/Polystyrol-Gemischen in Gegenwart von Wasser beschrieben, wobei die Behandlung bei Temperaturen von > 280°C in der Schmelze im Extruder erfolgt.

Weiterhin ist auch in der EP-A 377115 die Herstellung von Blends aus Polyphenylenethern und Polystyrolen beschrieben, wobei die Entfernung von flüchtigen Substanzen wie Toluol und Styrol durch Dampfbehandlung des pelletisierten Blends in einem Extruder erfolgt.

In der DE 19537114 ist ein Verfahren zur Trocknung von thermoplastischen Polymerpulvern in der Schmelze in einem Mischapparat beschrieben.

Es hat sich gezeigt, dass mit bekannten Verfahren wie der Wasserbehandlung einer Schmelze im Extruder oder Entgasung der Schmelze der Restmonomerengehalt nicht im gewünschten Maße abgesenkt werden konnte.

Aufgabe der vorliegenden Erfindung war es, ein verbessertes Verfahren zur Behandlung von Blends aus Polystyrol und vernetzten Polyvinylpyrrolidon-Polymeren zu finden, welches zu einem möglichst geringen Restmonomerengehalt an Styrol führt.

Demgemäß wurde ein Verfahren zur Verringerung des Styrol-Restmonomerengehalts in Blends aus Polystyrol und wasserunlöslichen vernetzten Polyvinylpyrrolidon-Polymeren durch Behandlung mit Wasser gefunden, welches dadurch gekennzeichnet ist, dass man den teilchenförmigen festen Blend behandelt.

Vorzugsweise werden nach dem erfindungsgemäßen Verfahren Blends mit einem Restmonomerengehalt von <20 mg/kg Styrol, besonders bevorzugt <10 mg/kg, bezogen auf das Gesamtgewicht des Blends, erhalten.

Als Polymer-Blends werden Mischungen von chemisch verschiedenen Polymeren bezeichnet. Im Falle der vorliegenden Erfindung bestehen die Blends aus einer thermoplastischen Polystyrol-Komponente und einem nicht-thermoplastischen wasserunlöslichen vernetzten Polyvinylpyrrolidon, wobei die Blends mit physikalischen Methoden nicht in die Einzelkomponenten zerlegt werden können.

Als Polystyrol-Komponente kommen alle gängigen Polystyrol-Typen in Betracht, wie Standard-Polystyrol, schlagzähmodifiziertes Polystyrol (SB-Typen) wie Copolymere aus Styrol und Butadien oder hochschlagzähmodifiziertes Polystyrol (HIPS-Typen), beispielsweise mit Polybutadien-Kautschuk oder Styrol-Butadien-Kautschuk modifziertes Polystyrol. Solche Polystyrole sind kommerziell erhältlich, beispielsweise als PS 158 k, PS 486 M oder Styrolux® (Fa. BASF) Erfindungsgemäß enthalten die Blends neben der Polystyrol-Komponente als zweite Polymer-Komponente in Wasser unlösliche, bei Wasseraufnahme nicht gelbildende, vernetzte Polyvinylpyrrolidon-Polymerisate, die in der Literatur auch als sogenannte Popcorn-Polymere bezeichnet werden (Vgl. J.W. Breitenbach, Chimia, Vol. 21, S. 449-488, 1976). In den Pharmakopöen wie USP oder Ph.Eur. werden solche Polymerisate als Crospovidone bezeichnet. Solche Polymere weisen eine poröse Struktur auf und sind reich an Hohlräumen. Die Polymere sind wie gesagt auch bei Wasseraufnahme nicht gelbildend. Das Quellvolumen solcher Polymerisate in Wasser bei 20°C liegt üblicherweise im Bereich von 2 bis 10 l/kg, vorzugsweise bei 4 bis 8 l/kg.

Die Herstellung von Popcorn-Polymeren ist an sich bekannt. Ob eine Polymerisation zu Popcorn-Polymeren anstelle von glasartigen Polymeren führt, wird wesentlich durch die Verfahrensführung beeinflusst. Geeignete Verfahren zur Herstellung von Popcorn-Polymeren wie sie im Rahmen der vorliegenden Erfindung eingesetzt werden, sind beispielsweise in der EP-B 88964beschrieben.

Bei den Popcorn-Polymeren handelt es sich wie gesagt um vernetzte Polymere. Die Vernetzung kann sowohl physikalisch als auch chemisch erfolgen. Als chemische Vernetzter eignen sich generell Verbindungen, die mindestens zwei ethylenisch ungesättigte nichtkonjugierte Doppelbindungen im Molekül enthalten und somit als difunktionelle Vernetzer bei der Polymerisation wirken. Bevorzugte Vertreter sind beispielweise Alkylenbisacrylamide wie Methylen-bisacrylamid und N,N'-Acryloylethylendiamin, N,N'-Divinylethylenharnstoff, N,N'-Divinylpropylenharnstoff, Ethyliden-bis-3-(N-Vinylpyrrolidon), N,N'-Divinylimidazolyl(2,2')butan und 1,1 '-bis-(3,3')vinyl benzimidazolin-2-on)1,4-butan. Weitere geeignete Vernetzer sind beispielsweise Alkylenglycoldi(meth)-acrylate wie Ethylenglykoldiacrylat, Ethylenglykoldimethacrylat, Tetraethylenglykoldiacrylat, Tetraethylenglykoldimethacrylat, Diethylenglykoldiacrylat,Diethylenglykoldimethacry lat, aromatische Divinylverbindungen wie Divinylbenzol und Divinyltoluol sowie Vinylacrylat, Allylacrylat, Allylmethacrylat, Divinyldioxan, Pentaerythrittriallylether, Triallylamine sowie Gemische der Vernetzer.

Besonders bevorzugte Vernetzer sind Ethylenglykoldiacrylat, Ethylenglykoldimethacrylat, N,N'-Divinylethylenharnstoff (DVEH) und Divinylbenzol (DVB).

Die Vernetzer werden in Mengen von 0 bis 10 Gew.-%, bevorzugt 0,1 bis 8 Gew.-%, besonders bevorzugt 0,2 bis 5 Gew.-%, bezogen auf die Gesamtmenge des Polymerisats eingesetzt.

Solche Crospovidone sind kommerziell erhältlich, beispielsweise als Divergan®-Typen, Fa. BASF oder Polyplasdone®-Typen, Fa. ISP.

Die Popcorn-Polymere weisen im allgemeinen Korngrößen von 15 µm bis 1500 µm auf.

Die Polymer-Blends werden bevorzugt durch Compoundierung im Extruder, also durch Co-Extrusion des Polystyrols mit dem vernetzten Polymer erhalten. Bei der Compoundierung wird das nicht thermoplastische Popcorn-Polymer in der Schmelze des thermoplastischen Polystyrols dispergiert. Die Verarbeitung erfolgt bei Temperaturen, die über der Glasübergangstemperatur der Polystyrol-Komponente, aber unterhalb der Zersetzungstemperatur der Popcorn-Polymere liegen. Üblicherweise werden die Blends bei Manteltemperaturen von 180 bis 220 °C erhalten. Vorzugsweise erfolgt die verarbeitung in einem Doppelschneckenextruder. Die Co-extrusion kann auch in Gegenwart von bis zu 10 Gew.-%, bezogen auf die Gesamtmenge der Polymeren, an Wasser erfolgen. Die erhaltenen körnigen Blends können in einem zusätzlichen Schritt zum Pulvern gemahlen werden, wobei mittlere Korngrößen von 20 bis 100 µm eingestellt werden können.

Die Blends weisen vor der Behandlung mit dem erfindungsgemäßen Verfahren üblicherweise Restmonomerengehalte von 100 bis 500 ppm Styrol auf.

Die Behandlung gemäß dem erfindungsgemäßen Verfahren erfolgt dergestalt, dass während der Behandlung der teilchenförmige Zustand der Blends erhalten bleibt. Die Blends werden nicht geschmolzen, sondern verbleiben in einem teilchenförmigen festen Zustand.

Zur Durchführung des erfindungsgemäßen Verfahrens werden die Blends zunächst mit Wasser versetzt und durch Rühren zu einer wässrigen Aufschlämmung verarbeitet.

Die Entfernung des Restmonomers Styrol kann durch Wasserdampfdestillation der wässrigen Aufschlämmung erfolgen.

Zur Durchführung der Wasserdampfdestillation werden die Blends in einem geeigneten druckfesten Behälter mit Wasser in einem Verhältnis von Blend zu Wasser von 1:1 bis 1:10 (Polymer : Wasser [kg:l]) vermischt. In die so entstandene wässrige Aufschlämmung wird unter Rühren Wasserdampf eingeleitet und gleichzeitig Wasser abdestilliert. Während der Behandlung beträgt die Innentemperatur üblicherweise 100 bis 120°C. Die Behandlungsdauer richtet sich nach der Menge des zu behandelnden Blends.

Nach der Wasserdampfdestillation kann man die Blends durch Abfiltrieren vom Wasser abtrennen und anschließend trocknen, gegebenenfalls unter Vakuum, bei Temperaturen von bis zu 100°C. Wenn man die Wasserdampfdestillation für feinteilige, pulverförmige Blends einsetzt, kann man nach der Wasserdampfdestillation die wässrige Aufschlämmung der Blends mittels Sprühtrocknung ohne Filtrationsschritt direkt trocknen.

Gemäß einer bevorzugten Ausführungsform erfolgt die Herstellung der Polymerblend - Wasser-Mischung in einem mit einer Vorrichtung zur Bewegung der zu behandelnden Masse ausgestatteten beheizbaren Behälter wie beispielsweise in einem Trockner, vorzugsweise in einem Schaufeltrockner, mit anschliessender direkter Verdampfung des Wassers. Die Entfernung des Wassers erfolgt bei Temperaturen von 80 bis 105°C. Vorzugsweise wird während der Behandlung ein Strom eines inerten Gases wie beispielsweise Stickstoff oder Argon über die Masse geleitet. Bei dieser Verfahrensvariante wird das Verhältnis [kg:l] von Blend zu Wasser so gewählt, dass es 1 :1 bis 3 :1, vorzugsweise 1:1 bis 2:1 beträgt. Die zu behandelnde Mischung mit Wasser ist aufgrund des hohen Polymeranteils zu Beginn der Behandlung eine körnige feuchte Masse und keine Aufschlämmung. In diesem Fall sind keine zusätzliche Filtrations- und Trocknungsschritte nötig, wodurch diese Verfahrensvariante besonders kostengünstig ist .

Sowohl bei der Wasserdampfdestillation als auch bei der Behandlung in einem schaufeltrockner liegen die Blends während der Behandlung in der wässrigen Aufschlämmung als diskrete Partikel vor. Auch wenn die Behandlungstemperatur teilweise, je nach Art der Polystyrol-Komponente, im Bereich der Glasübergangstemperatur der Polystyrol-Komponente des Blends liegt, bildet sich keine Schmelze, sodass die Teilchengrößenverteilung des Blends erhalten bleibt

Der Restmonomeren-Gehalt der nach dem erfindungsgemäßen Verfahren erhaltenen Blends beträgt <20 ppm (<20 mg/kg), vorzugsweise <10 ppm.

Überraschenderweise liessen sich die Blends aus Polystyrol und Crospovidone auf die erfindungsgemäße Weise behandeln, ohne dass es zu einer Beeinträchtigung der Morphologie und der Stabilität der Blends kam. Angesichts der Fähigkeit der vernetzten Polymerkomponente Wasser aufzunehmen und teilweise einen erheblichen Quelldruck zu entwickeln, hätte der Fachmann eigentlich mit einer Entmischung des Blends und einer Zerstörung der Hohlraumstruktur gerechnet.

Überraschend war auch, dass bei der bevorzugten Verfahrensvariante, der Behandlung in einem Schaufeltrockner, mit nur geringen Wassermengen auf einfache und kostengünstige Weise der Restmonomerengehalt auf so geringe Werte abgesenkt werden konnte.

Aufgrund des sehr niedrigen Restmonomerengehalts von <10 ppm eignen sich die nach dem erfindungsgemäßen Verfahren erhaltenen Blends hervorragend für den Einsatz im Zusammenhang mit Nahrungs- und Genussmitteln, beispielsweise als Filterhilfsmittel bei der Behandlung von Getränken wie Fruchtsäften, Bier, Wein und Schaumweinen, Teeprodukten oder andere Verfahren zur Adsorption von unerwünschten Inhaltsstoffen aus Nahrungs- und Genussmitteln.

### Beispiele

### Wasserdampfdestillation: allgemeine Vorschrift

In einem Glas- oder Metall- Gefäß wurden Polymerblend und VE Wasser in einem Verhältnis 1:3 bis 1:10 gemischt. Das Gefäß wurde auf 120°C Außentemperatur aufgeheizt. Dampf wurde aus einem Wasserdampfgenerator in das Gefäß eingeleitet und gleichzeitig wurde Wasser über eine Destillationsbrücke auskondensiert (Wasserdampfdestillation). Während der Wasserdampfdestillation betrugt die Innentemperatur 100°C - 120°C bei Dampfdrücken von 0.2 bis 0.5 MPa.

Am Ende der Wasserdampfdestillation wurden das Pulver bzw. die grobkörnigen Pordukte durch Filtration abgetrennt und das Rest-Styrol wie unten beschrieben bestimmt.

### Schaufeltrocknung: allgemeine Vorschrift

Polymerblend und Wasser wurden in dem entsprechenden Verhältnis gemischt und in einem Schaufeltrockner behandelt. Die Mischung wurde erhitzt (bis zu 100°C) und mit einem Stickstoffstrom bei Atmosphärendruck getrocknet.

### Bestimmung der Restfeuchte und des Rest-Styrols: allgemeine Vorschrift

Die Endprobe und jede weitere zwischen Probe wurden in zwei Unterproben geteilt. Die erste Unterprobe wurde zur Bestimmung des Feststoffgehalt FG (mittel Trocknung im Vacuum bei 80°C) benutzt. Gleichzeitig wurd das Rest-Styrol in der zweiten Probe (ohne weitere Trocknung) bestimmt.

### Die Bestimmung des Rest-Styrols wurde mit folgender Methode durchgeführt:

Die Analysen Probe wurde im N,N-Dimethylacetamid (DMAA) gelöst und mit Headspace-Gaschromatographie untersucht. Die gaschromatographische Trennung erfolgte auf einer Fused-Silica-Kapillare mit einem Film aus Polydimethylsiloxan. Zur Detektion wurde ein Flammenionisationsdetektor eingesetzt. Es wurd nach der Standardadditionsmethode quantifiziert.

Auf diese Weise wurde der Restgehalt Styrol W, bezogen auf die feuchte Probe, bestimmt. Um den Rest-Styrol Wert bezogen auf den Feststoff zu erhalten, wurde rechnerisch noch der Feststoffgehalt berücksichtigt:

### a) Rest Styrol [mg/kg] = W/FG

Für die Polymer-Blends kann man den Rest Styrol bezogen auf Polystyrol Anteil rechnen. In den Beispielen unten beträgt den Anteil an Polystyrol im Polymer-Blend 70%:

### b) Rest Styrol bez. auf Polystyrol [mg/kg] = Rest Styrol (a) / Polystyrol Anteil

Die in den folgenden Beispielen eingesetzten Blends wurden durch Co-Extrusion mit und ohne Wassereinspritzung erhalten. Bei Wassereinspritzung sind die Prozentangaben zur eingesetzten Wassermenge Gew.-%, bezogen auf die Gesamtmenge an Polymeren. Die Prozentangaben zu den eingesetzten Polymerkomponenten sind Gew.-%, bezogen auf die Gesamtmenge an Polymeren im Blend.

Die mittlere Partikelgrößenverteilung D[0,5] wurde mit einem Malvern Mastersizer bestimmt.

### 1) Behandlung von grobkörnigen Blends durch Wasserdampfdestillation

### Beispiel 1 A)

Das Ausgangmaterial (mittlere Teilchengröße 2 mm) wurde durch Coextrusion von HIPS Polystyrol (70%) und Crospovidone (30%) ohne Wassereinspritzung erhalten. Behandlung: Wasserdampfdestillation bei 100°C, 500 g Blend, 1500 g Wasser

| Behandlungszeit [min] | Rest Styrol [mg/kg] | Rest Styrol bez. auf Polystyrol [mg/kg] | Rest Styrol, bezogen auf Rest Styrol im Ausgangsmaterial [%] |
|---|---|---|---|
| 0 | 175 (Ausgangsmaterial) | 250 | 100 |
| 120 | 60 | 85,7 | 34,3 |
| 180 | 50 | 71,4 | 28,6 |
| 240 | 45 | 64,3 | 25,7 |
| 300 | 40 | 57,1 | 22,9 |
| 360 | 30 | 42,9 | 17,1 |

### Beispiel 1 B)

Das Ausgangmaterial (mittlere Teilchengröße 2 mm) wurde durch Coextrusion von Standard Polystyrol (70 %) und Crospovidone (30 %) mit 1,5 % Wassereinspritzung erhalten.

Behandlung: Wasserdampfdestillation bei 100°C, 500 g Blend, 1500 g Wasser

| Behandlungszeit [min] | Rest Styrol [mg/kg] | Rest Styrol bez. auf Polystyrol | Rest Styrol, bezogen auf Rest Styol im Ausgangsmaterial [%] |
|---|---|---|---|
| 0 | 91 (Ausgangsmaterial) | 130 | 100 |
| 120 | 34 | 48,6 | 37,4 |
| 240 | 23,7 | 33,9 | 26,0 |
| 360 | 19,1 | 27,3 | 21,0 |
| 480 | 13,8 | 19,7 | 15,2 |
| 600 | 9,3 | 13,3 | 10,2 |

### Beispiel 1 C)

Das Ausgangmaterial (mittlere Teilchengröße 2 mm) wurde durch Coextrusion von Standard Polystyrol (70%) und Crospovidone (30%) mit Wassereinspritzung (1,5%) erhalten.

Behandlung: Wasserdampfdestillation bei 120°C; 20 kg Blend, 80 kg Wasser

| Behandlungszeit [min] | Rest Styrol [mg/kg] | Styrol bez. auf Polystyrol [mg/kg] | Rest Styrol bezogen auf Rest Styol im Ausgangsmaterial [%] |
|---|---|---|---|
| 0 | 114,5 (Ausgangsmaterial) | 164 | 100 |
| 300 | 4,2 | 6 | 3,7 |

### 2) Behandlung von pulverförmigen Blends

### Beispiele 2 A, B, C, D)

Das Ausgangmaterial wurde durch Co-extrusion von Standard Polystyrol (70%) und Crospovidone (30%) mit Wassereinspritzung erhalten und anschließend auf die angegebnen Teilchengrößen gemahlen.

### Behandlung: Wasserdampfdestillation bei 100°C

| Beispiel | 2 A | 2 B | 2 C | 2 D |
|---|---|---|---|---|
| Wassereinspritzung im Ausgangsmaterial | 1,25% | 1,5% | 0,5% | 0,5% |
| D[0,5] der Probe | 56 | 82 | 59 | 72 |
| Rest Styrol im Ausgangsmaterial (Rest Styrol im Ausgangsmaterial, bez. auf Polystyrol) [mg/kg] | 103 (147) | 134 (191) | 118 (167) | 140 (200) |
| Behandlungszeit [min] | 360 | 360 | 360 | 240 |
| Rest Styrol Endwert (Rest Styrol Endwert, bez. auf Polystyrol) [mg/kg] | 3,6 (5,1) | 3,5 (5) | 2 (2,8) | 2 (2,8) |
| Endwert Rest Styrol, bezogen auf Rest Styrol im Ausgangsmaterial [%] | 3,5 | 2,6 | 1,7 | 1,4 |

### Beispiele 2 E, F)

Das Ausgangmaterial wurde aus Standard Polystyrol (70%) und Crospovidone (30%) mit Wassereinspritzung (0,5%) erhalten und gemahlen (mittlere Partikelgroße D[0,5] = 59 µm)

### Behandlung: Schaufeltrocknung bei 100°C

| Beispiel | 2 E | | 2 F | |
|---|---|---|---|---|
| Abmischung (Gewichtsverhältnis) | Pulver : Wasser (1:1) | | Pulver: Wasser (1,5:1) | |
| Behandlungszeit [min] | Rest Styrol [mg/kg] | Rest Styrol bezogen auf Rest Styrol im Ausgangsmaterial [%] | Rest Styrol [mg/kg] | Rest Styrol bezogen auf Rest Styrol im Ausgangsmaterial [%] |
| 0 | 111 (Ausg.material) | 100 | 133 (Ausg.material) | 100 |
| 60 | | | 12 | 9,0 |
| 120 | 3 | 2,7 | 3 | 2,2 |
| 180 | | | 2 | 1,5 |
| 240 | < 2 | 1,8 | < 2 | 1,5 |

### Beispiele 3 A, B)

Das Ausgangmaterial wurde durch Co-extrusion von Standard Polystyrol (70%) und Crospovidone (30%) mit Wassereinspritzung (0,5%) erhalten und anschließend auf die angegebene Partikelgröße gemahlen.

### Behandlung: Wasserdampfdestillation (bei 100°C) von pulverförmigen Blends mit verschiedenen mittleren Partikelgrößen

| Beispiel | 3 A | 3 B |
|---|---|---|
| D[0,5] des Ausgangsmaterial | 26 | 33 |
| Rest Styrol im Ausgangsmaterial | 128 | 127 |
| (Rest Styrol im Ausgangsmaterial, bez. auf Polystyrol) [mg/kg] | (183) | (181) |
| Behandlungszeit [min] | 120 | 120 |
| Rest Styrol Endwert | 2,6 | 2 |
| (Rest Styrol Endwert, bez. auf Polystyrol) [mg/kg] | (3,7) | (2,8) |
| Endwert Rest Styrol, bezogen auf Rest Styrol im Ausgangsmaterial [%] | 2,0 | 2,0 |

### Beispiele 3 C, D)

Das Ausgangmaterial wurde durch Co-extrusion von Standard Polystyrol (70 %) und Crospovidone (30 %) mit Wassereinspritzung (0,5 %) erhalten und anschließend gemahlen. (mittlere Partikelgröße D[0,5] = 26 µm)

### Behandlung: Schaufeltrocknung von wässrigen Aufschlämmungen pulverförmiger Blends bei 100°C

| Beispiel | 3 C) | | 3 D) | |
|---|---|---|---|---|
| Abmischung (Gewichtsverhältnis) | Pulver : Wasser (1: 1) | | Pulver : Wasser 1,87:1 | |
| Behandlungszeit [min] | Rest Styrol [mg/kg] | Rest Styrol bezogen auf Rest Styrol im Ausgangsmaterial [%] | Rest Styrol [mg/kg] | Rest Styrol bezogen auf Rest Styrol im Ausgangsmaterial [%] |
| 0 | 137 | 100 | 124,4 | 100 |
| 60 | | | 14,1 | 11,3 |
| 120 | 8 | 5,8 | 4,0 | 3,3 |
| 180 | | | 3,0 | 2,4 |
| 240 | 2 | 1,4 | 2,0 | 1,6 |

### Beispiel 4)

Zum Vergleich wurde gemahlenes Standard-Polystyrol mit einer mittleren Teilchengröße D[0,5] 203 µm behandelt.

### Behandlung: Wasserdampfdestillation bei 100°C von 200 g Polystyrols,1800 g Wasser

| Behandlungszeit [min] | Rest Styrol [mg/kg] | Rest Styrol bezogen auf Rest Styrol im Ausgangsmaterial [%] |
|---|---|---|
| 0 | 370 | 100 |
| 240 | 210 | 56,8 |
| 300 | 190 | 51,4 |
| 360 | 190 | 51,4 |

Es zeigte sich, dass aus den Polystyrol-haltigen Blends im Vergleich zu reinem Polystyrol die Menge an Restmonomeren, bezogen auf die Polystyrolmenge, im Blend viel stärker abgesenkt werden konnte.

## Patentansprüche

1. Verfahren zur Entfernung von Styrol-Restmonomeren aus Polystyrol und wasserunlösliches, vernetztes Polyvinylpyrrolidon enthaltenden Blends durch Behandlung mit Wasser, **dadurch gekennzeichnet, dass** die Behandlung an einem teilchenförmigen festen Blend erfolgt.

2. Verfahren nach Anspruch 1, **dadurch gekennzeichnet, dass** man einen teilchenförmigen Blend aus Polystyrol und einen Popcorn-Polymeren mit Wasser mischt, die Mischung einer Wasserdampfdestillation unterwirft und anschließend den teilchenförmigen Blend isoliert.

3. Verfahren nach Anspruch 1 oder 2, **dadurch gekennzeichnet, dass** die Mischung, die der Wasserdampfdestillation zugeführt wird, aus Blend und Wasser in einem Gewichtsverhältnis von 1:2 bis 1:10 hergestellt wird.

4. Verfahren nach einem der Ansprüche 1 bis 3, **dadurch gekennzeichnet, dass** im Anschluss an die Wasserdampfdestillation der teilchenförmige Blend durch Filtration abgetrennt und getrocknet wird.

5. Verfahren nach einem der Ansprüche 1 bis 4, **dadurch gekennzeichnet, dass** die Wasserdampfdestillation bei Temperaturen von 100 bis 120°C durchgeführt wird.

6. Verfahren nach einem der Ansprüche 1 bis 5, **dadurch gekennzeichnet, dass** im Anschluss an die Wasserdampfdestillation durch Sprühtrocknung ein pulverförmiger Blend erhalten wird.

7. Verfahren nach Anspruch 1, **dadurch gekennzeichnet, dass** man einen teilchenförmigen Blend aus Polystyrol und einem Popcorn-Polymeren mit Wasser mischt und der Mischung in einem mit einer Vorrichtung zur Bewegung der Masse ausgestatteten beheizbaren Behälter direkt das Wasser entzieht.

8. Verfahren nach Anspruch 7, **dadurch gekennzeichnet, dass** als mit einer Vorrichtung zum Bewegen der Mischung versehener, beheizbarer Behälter ein Schaufeltrockner eingesetzt wird.

9. Verfahren nach Anspruch 7 oder 8, **dadurch gekennzeichnet, dass** die Mischung, der direkt das Wasser entzogen wird, ein Gewichtsverhältnis von Blend zu Wasser von 1:1 bis 3:1 aufweist.

10. Verfahren nach einem der Ansprüche 7 bis 9, **dadurch gekennzeichnet, dass** die Mischung ein Gewichtsverhältnis von Blend zu Wasser von 1:1 bis 2:1 aufweist.

11. Verfahren nach einem der Ansprüche 7 bis 10, **dadurch gekennzeichnet, dass** die Behandlung, bei der das Wasser direkt der Mischung entzogen wird, bei Temperaturen von 90 bis 105°C erfolgt.

12. Verfahren nach einem der Ansprüche 1 bis 11, **dadurch gekennzeichnet, dass** der Blend 50 bis 90 Gew.-% eines Polystyrols und 10 bis 50 Gew.-% eines wasserunlöslichen vernetzten Polyvinylpyrrolidons enthält.

13. Verfahren nach einem der Ansprüche 1 bis 12, **dadurch gekennzeichnet, dass** der Blend als Polystyrol Standardpolystyrol, mit Kautschuk hochschlagzähmodifiziertes Polystyrol oder ein Styrol-Butadien-Copolymerisat enthält.

14. Verfahren nach einem der Ansprüche 1 bis 13, **dadurch gekennzeichnet, dass** der Blend als Polystyrol Standardpolystyrol enthält.

15. Verfahren nach einem der Ansprüche 1 bis 14, **dadurch gekennzeichnet, dass** der Gehalt an Styrol-Restmonomeren auf <20 mg/kg, bezogen auf das Gesamtgewicht des Blends, abgesenkt wird.

16. Verfahren nach einem der Ansprüche 1 bis 14, **dadurch gekennzeichnet, dass** der Gehalt an Styrol-Restmonomeren auf <10 mg/kg, bezogen auf das Gesamtgewicht des Blends, abgesenkt wird.

17. Teilchenförmige Blends aus einem Polystyrol und einem wasserunlöslichen vernetzten Polyvinylpyrrolidon, mit einem Styrolrestmonomerengehalt von <20 mg/kg, erhalten nach einem Verfahren gemäß einem der Ansprüche 1 bis 16.

18. Verwendung eines Blends gemäß Anspruch 17 als Hilfsmittel zur Behandlung von Nahrungs- und Genussmitteln.

19. Verwendung nach Anspruch 18 als Filterhilfsmittel bei der Behandlung von Getränken.

## Claims

1. A process for removal of residual styrene monomers from polystyrene and from blends comprising water-insoluble, crosslinked polyvinylpyrrolidone, via treatment with water, which comprises carrying out the treatment on a particulate solid blend.

2. The process according to claim 1, wherein a particulate blend composed of polystyrene and of a popcorn polymer is mixed with water, the mixture is subjected to a steam distillation process, and then the particulate blend is isolated.

3. The process according to claim 1 or 2, wherein the mixture passed to the steam distillation process is prepared from blend and water in a ratio by weight of from 1:2 to 1:10.

4. The process according to any of claims 1 to 3, wherein, following the steam distillation process, the particulate blend is isolated via filtration and is dried.

5. The process according to any of claims 1 to 4, wherein the steam distillation process is carried out at temperatures of from 100 to 120°C.

6. The process according to any of claims 1 to 5, wherein, following the steam distillation process, a pulverulent blend is obtained via spray drying.

7. The process according to claim 1, wherein a particulate blend composed of polystyrene and of a popcorn polymer is mixed with water, and the water is directly drawn off from the mixture in a heatable container equipped with an apparatus for moving the composition.

8. The process according to claim 7, wherein the heatable container used, provided with an apparatus for moving the mixture, comprises a paddle dryer.

9. The process according to claim 7 or 8, wherein the mixture from which the water is directly drawn off has a ratio by weight of blend to water of from 1:1 to 3:1.

10. The process according to any of claims 7 to 9, wherein the mixture has a ratio by weight of blend to water of from 1:1 to 2:1.

11. The process according to any of claims 7 to 10, wherein the treatment in which the water is directly drawn off from the mixture takes place at temperatures of from 90 to 105°C.

12. The process according to any of claims 1 to 11, wherein the blend comprises from 50 to 90% by weight of a polystyrene and from 10 to 50% by weight of a water-insoluble crosslinked polyvinylpyrrolidone.

13. The process according to any of claims 1 to 12, wherein the polystyrene present in the blend comprises standard polystyrene, polystyrene modified with rubber so as to be highly impact resistant, or a styrene butadiene copolymer.

14. The process according to any of claims 1 to 13, wherein the polystyrene present in the blend comprises standard polystyrene.

15. The process according to any of claims 1 to 14, wherein the content of residual styrene monomers is lowered to <20 mg/kg, based on the total weight of the blend.

16. The process according to any of claims 1 to 14, wherein the content of residual styrene monomers is lowered to <10 mg/kg, based on the total weight of the blend.

17. A particulate blend composed of a polystyrene and of a water-insoluble crosslinked polyvinylpyrrolidone, with a residual styrene monomer content of <20 mg/kg, obtained by a process according to any of claims 1 to 16.

18. The use of a blend according to claim 17 as an aid to the treatment of foods and of other consumable items.

19. The use according to claim 18 as filter aid during the treatment of drinks.

## Revendications

1. Procédé de séparation de monomères résiduels de styrène de mélanges contenant du polystyrène et de la polyvinylpyrrolidone réticulée et insoluble dans l'eau par traitement avec de l'eau, **caractérisé en ce que** le traitement est réalisé sur un mélange solide particulaire.

2. Procédé selon la revendication 1, **caractérisé en ce qu'**un mélange particulaire de polystyrène et d'un polymère pop-corn est mélangé avec de l'eau, le mélange est soumis à une distillation à la vapeur d'eau, puis le mélange particulaire est isolé.

3. Procédé selon la revendication 1 ou 2, **caractérisé en ce que** le mélange qui est soumis à la distillation à la vapeur d'eau est obtenu à partir du mélange et d'eau en un rapport en poids de 1:2 à 1:10.

4. Procédé selon l'une quelconque des revendications 1 à 3, **caractérisé en ce qu'**immédiatement après la distillation à la vapeur d'eau, le mélange particulaire est séparé par filtration et séché.

5. Procédé selon l'une quelconque des revendications 1 à 4, **caractérisé en ce que** la distillation à la vapeur d'eau est réalisée à des températures de 100 à 120 °C.

6. Procédé selon l'une quelconque des revendications 1 à 5, **caractérisé en ce qu'**un mélange poudreux est obtenu par séchage par atomisation immédiatement après la distillation à la vapeur d'eau.

7. Procédé selon la revendication 1, **caractérisé en ce qu'**un mélange particulaire de polystyrène et d'un polymère pop-corn est mélangé avec de l'eau et l'eau est éliminée directement du mélange dans un contenant chauffable muni d'un dispositif pour le déplacement de la masse.

8. Procédé selon la revendication 7, **caractérisé en ce qu'**un sécheur à ailettes est utilisé en tant que contenant chauffable muni d'un dispositif pour le déplacement du mélange.

9. Procédé selon la revendication 7 ou 8, **caractérisé en ce que** le mélange à partir duquel l'eau est directement éliminée présente un rapport en poids entre le mélange et l'eau de 1:1 à 3:1.

10. Procédé selon l'une quelconque des revendications 7 à 9, **caractérisé en ce que** le mélange présente un rapport en poids entre le mélange et l'eau de 1:1 à 2:1.

11. Procédé selon l'une quelconque des revendications 7 à 10, **caractérisé en ce que** le traitement par lequel l'eau est directement éliminée du mélange est réalisé à des températures de 90 à 105 °C.

12. Procédé selon l'une quelconque des revendications 1 à 11, **caractérisé en ce que** le mélange contient 50 à 90 % en poids d'un polystyrène et 10 à 50 % en poids d'une polyvinylpyrrolidone réticulée et insoluble dans l'eau.

13. Procédé selon l'une quelconque des revendications 1 à 12, **caractérisé en ce que** le mélange contient du polystyrène standard, du polystyrène modifié avec du caoutchouc pour présenter une grande résistance aux impacts ou un copolymère styrène-butadiène en tant que polystyrène.

14. Procédé selon l'une quelconque des revendications 1 à 13, **caractérisé en ce que** le mélange contient du polystyrène standard en tant que polystyrène.

15. Procédé selon l'une quelconque des revendications 1 à 14, **caractérisé en ce que** la teneur en monomères résiduels de styrène est réduite à < 20 mg/kg par rapport au poids total du mélange.

16. Procédé selon l'une quelconque des revendications 1 à 14, **caractérisé en ce que** la teneur en monomères résiduels de styrène est réduite à < 10 mg/kg par rapport au poids total du mélange.

17. Mélange particulaire d'un polystyrène et d'une polyvinylpyrrolidone réticulée et insoluble dans l'eau, ayant une teneur en monomères résiduels de styrène < 20 mg/kg, obtenu par un procédé selon l'une quelconque des revendications 1 à 16.

18. Utilisation d'un mélange selon la revendication 17 en tant qu'adjuvant pour le traitement de produits alimentaires et de produits alimentaires de luxe.

19. Utilisation selon la revendication 18 en tant qu'adjuvant de filtration pour le traitement de boissons.
